# DEMANDE DE BREVET EUROPEEN

(11) **EP 1 990 177 A2**
(43) Date de publication de la demande: **12.11.2008**
(21) Numéro de dépôt: 08103105.6
(22) Date de dépôt: 28.03.2008
(51) Int. Cl.: B29C 63/04, B32B 37/12, B32B 3/04

(54) **Machine destinée à l'application d'une feuille de couverture sur des panneaux**

(30) Priorité: 07.05.2007 ES 200701207
(71) Demandeur: Barberan Latorre, Jesús Francisco, 08860 Castelldefels (Barcelona) (ES)
(72) Inventeur: Barberan Latorre, Jesús Francisco, 08860 Castelldefels (Barcelona) (ES)
(74) Mandataire: Cabinet Plasseraud

(57) **Abrégé**

Machine destinée à l'application d'une feuille de couverture sur des panneaux, comprenant une étape d'application de la feuille de couverture (13), avec une phase au cours de laquelle est réalisé l'encollage de la surface des panneaux (7) d'application par un rouleau encolleur (8), et une phase au cours de laquelle l'encollage est réalisé, par des lèvres (15), des bords latéraux de la feuille (13), pour la fixation de la feuille (13) sur la surface encollée des panneaux (7) et la fixation postérieure des bords latéraux encollés de la feuille mentionnée (13) sur les chants de ces panneaux (7).

## Description

### Domaine de l'invention

La présente invention concerne la couverture de panneaux de base en bois ou similaire, par l'application d'une feuille de surface esthétique, proposant une machine destinée à réaliser ladite application, avec des caractéristiques permettant de couvrir de façon efficace et avantageuse tant la face superficielle supérieure des panneaux que les chants.

### Etat de l'art

Les procédés de couverture des surfaces planes des panneaux de bois ou similaire, sont réalisés traditionnellement par l'application de colle sur la surface du panneau avec des rouleaux applicateurs, en intégrant ensuite sur la surface encollée la feuille qui constitue la couverture à installer.

Quand il s'agit de réaliser la couverture des chants des panneaux, on utilise cependant des lèvres de laminage, grâce auxquelles la colle de fixation est appliquée sur la feuille de couverture, en intégrant cette dernière, après l'encollage, sur les chants qui doivent être couverts. L'application de colle avec ces lèvres applicatrices est beaucoup plus délicate qu'avec les rouleaux, par conséquent ladite application avec les lèvres n'est utilisée que lorsqu'il faut couvrir les chants des panneaux d'application.

### Objet de l'invention

L'invention concerne une machine conçue selon un mode de réalisation permettant de combiner les applications de colle au rouleau et avec les lèvres, pour réaliser la couverture de la surface et des chants des panneaux en un même procédé opérationnel.

Cette machine qui fait l'objet de l'invention est composée d'une succession d'étapes opérationnelles, comprenant une étape d'alimentation des panneaux qui doivent être couverts, une étape d'application de la feuille de couverture, et une étape de sortie des panneaux couverts.

L'étape d'application de la feuille de couverture comprend pour sa part deux phases successives, la première comprenant un rouleau encolleur disposé en rapport avec le pas de déplacement des panneaux qui doivent être couverts dans le sens longitudinal de la machine, alors que la seconde phase comprend un débobineur de la feuille qui doit être appliquée, en rapport avec le pas de quelques lèvres d'application de colle sur les deux bords latéraux de celle-ci et sortie sur le pas de déplacement longitudinal des panneaux.

De cette façon, on obtient une machine avec laquelle les panneaux d'application sont déplacés automatiquement le long d'un parcours longitudinal, déplacement au cours duquel ils reçoivent une application de colle sur leur surface, et après l'incorporation de la feuille de couverture imprégnée à son tour de colle sur les bords latéraux destinés à la couverture des chants, pour passer à la sortie par un train de doublage et application desdits bords latéraux encollés de la feuille sur les chants du panneau.

On obtient ainsi un procédé très simple et rapide d'application totale de la feuille de couverture sur la surface et sur les chants des panneaux d'application, avec une grande perfection et qualité de l'application.

Par conséquent, la machine selon la présente invention est dotée de caractéristiques très avantageuses, étant utilisée de préférence pour la fonction d'application à laquelle elle est destinée.

### Description des figures

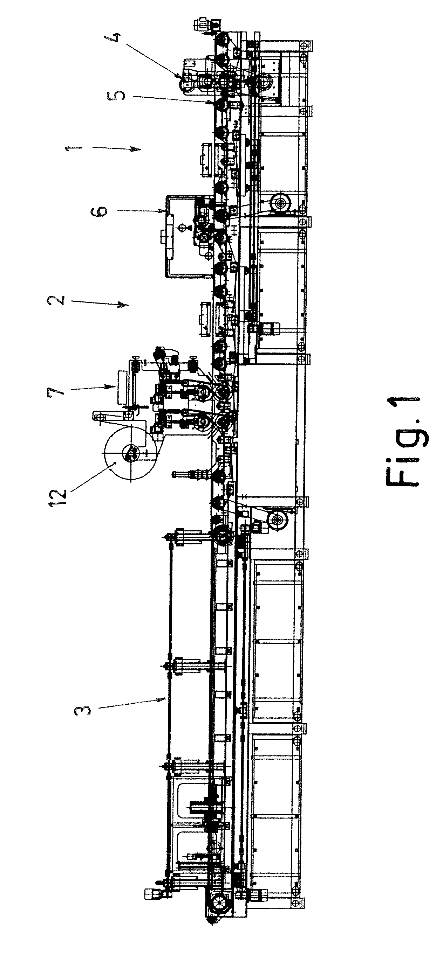

La figure 1 illustre une vue latérale de l'ensemble général de la machine préconisée ;
la figure 2 présente un détail agrandi de la phase d'encollage de la surface des panneaux d'application par rouleau ;
la figure 3 présente un détail agrandi de la phase d'encollage de la feuille de couverture et son intégration sur les panneaux d'application ;
la figure 4 présente un schéma du procédé opérationnel des deux phases mentionnées d'encollage du panneau d'application et de la feuille de couverture et l'union entre ceux-ci.

### Description détaillée de l'invention

L'objet de la présente invention concerne une machine destinée à l'application de la feuille de couverture sur des panneaux de bois ou similaire, avec un mode de réalisation permettant d'appliquer de façon automatique et continue la feuille de couverture sur la surface et les chants des panneaux qui doivent être couverts.

La machine préconisée comprend une étape (1) d'alimentation des panneaux qui doivent être couverts, une étape (2) d'application de la feuille de couverture sur les panneaux et une étape (3) de sortie des panneaux avec la couverture appliquée.

L'étape (1) d'alimentation des panneaux comprend un système (4) de brosses giratoires de nettoyage des panneaux et un système (5) de calandrage pour adapter la surface des panneaux à des conditions de qualité élevée pour l'intégration de la couverture qui doit être appliquée.

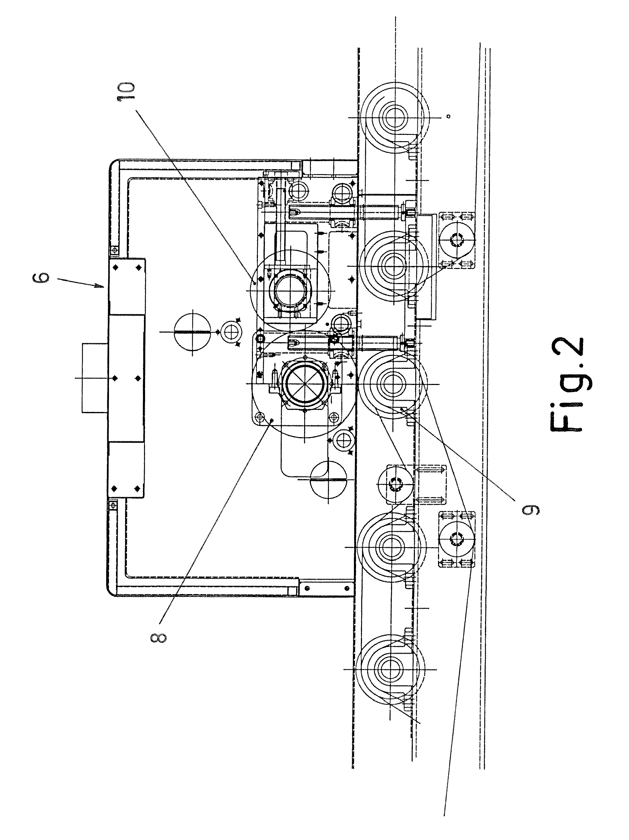

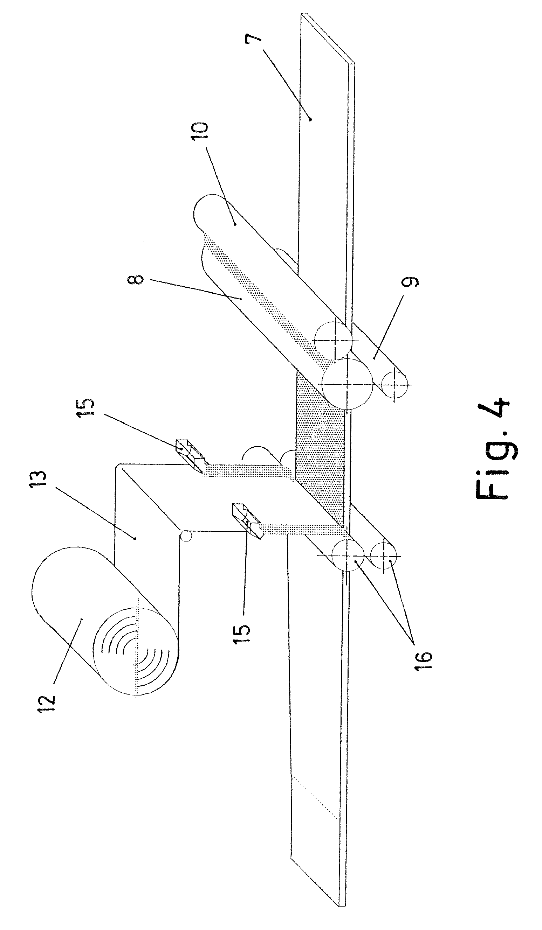

L'étape (2) d'application de la feuille de couverture comprend une phase (6) d'encollage de la surface des panneaux (7) qui doivent être couverts, intégrant un rouleau encolleur (8), en rapport avec un rouleau de contre-pression (9) et un rouleau doseur (10), ainsi que cela est illustré sur les figures 2 et 4.

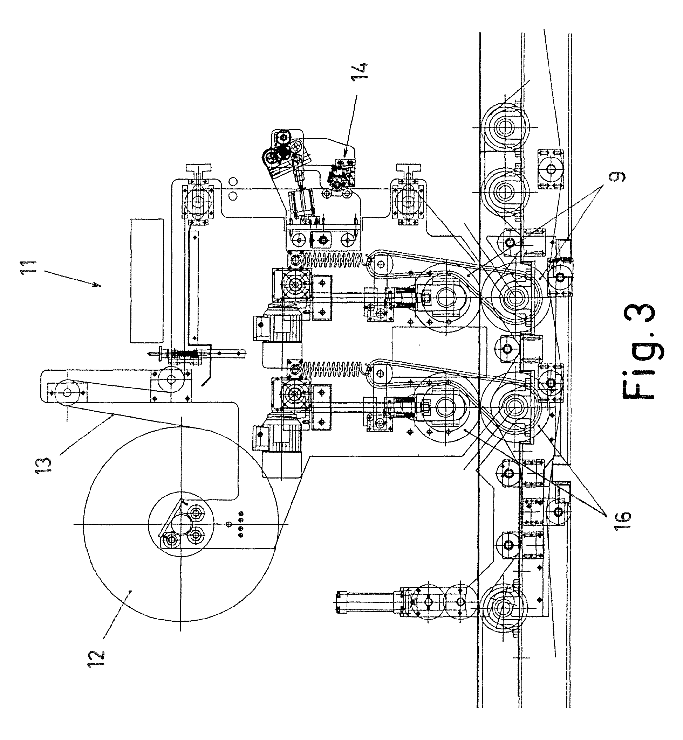

Ladite étape (2) d'application de la feuille de couverture comprend également une phase (11) d'intégration de la feuille de couverture sur les panneaux (7) qui doivent être couverts, en intégrant, ainsi que cela est illustré sur la figure 3, un débobineur (12) de la feuille (13) destinée à la couverture, laquelle passe par un applicateur (14) de colle par l'intermédiaire de lèvres, où la colle est appliquée par les deux lèvres (15) sur les bords latéraux de la feuille (13), ainsi que cela est illustré sur la figure 4.

Après ladite zone d'application de colle sur les bords latéraux de la feuille (13), celle-ci se dépose sur la surface des panneaux encollée lors de la phase antérieure (6), l'ensemble passant par des calandres (16) qui fixent la feuille (13) sur ladite surface des panneaux (7) au cours du déplacement de ceux-ci vers l'avant.

L'étape (3) de sortie des panneaux avec la feuille (13) appliquée entre eux comprend un système de rouleaux qui réalise un doublage progressif des bords latéraux de la feuille (13) sur les chants des panneaux (7), jusqu'à la fixation complète de la couverture sur ceux-ci.

Par conséquent, la machine fonctionne de telle sorte que lors du passage des panneaux (7) qui doivent être couverts par l'étape (1) d'alimentation, ceux-ci soient nettoyés par le système de brosses (4) et conditionnés par le système de calandrage (5), la colle étant ensuite appliquée sur la surface de ceux-ci par le rouleau encolleur (8), de telle sorte qu'ensuite dans la zone de la phase (11) ils se rencontrent avec la feuille (13) destinée à la couverture, laquelle arrive de l'applicateur à lèvres (14) avec ses bords latéraux encollés, de telle manière qu'au passage postérieur par les calandres (16) la fixation de la feuille (13) soit produite sur la surface des panneaux (7), et ensuite, par le système de rouleaux de l'étape de sortie (3), la fixation des bords latéraux de la feuille (13) sur les chants des panneaux (7), ceux-ci sortant totalement couverts.

## Revendications

1. Machine destinée à l'application d'une feuille de couverture sur des panneaux, du type comprenant en succession continue une étape d'alimentation des panneaux à couvrir, une étape d'application de la feuille de couverture, et une étape de sortie des panneaux couverts, **caractérisée en ce que** l'étape (2) d'application de la feuille (13) de couverture comprend une phase (6) d'encollage de la surface des panneaux (7) à couvrir, et une phase (11) au cours de laquelle l'application de colle est réalisée sur les bords latéraux de la feuille de couverture (13) et l'intégration de celle-ci sur la surface encollée des panneaux (7), pour la fixation postérieure des bords latéraux encollés mentionnés sur les chants des panneaux (7) au cours de l'étape de sortie (3).

2. Machine destinée à l'application d'une feuille de couverture sur des panneaux selon la revendication 1, **caractérisée en ce que** la phase (6) d'encollage de la surface des panneaux (7) comprend un rouleau encolleur (8), en rapport avec un rouleau de contre-pression (9) et un rouleau doseur (10).

3. Machine destinée à l'application d'une feuille de couverture sur des panneaux selon la revendication 1, **caractérisée en ce que** la phase (11) d'intégration de la feuille (13) de couverture sur les panneaux (7) comprend un débobineur (12) de la feuille (13) et un applicateur de colle (14) par des lèvres (15) pour l'encollage des bords latéraux de la feuille (13), entraînant un passage par des calandres (16) de fixation de la feuille (13) sur les panneaux (7).

4. Machine destinée à l'application d'une feuille de couverture sur des panneaux selon la revendication 1, **caractérisée en ce que** l'étape (3) de sortie comporte un système de rouleaux pour le doublage progressif des bords latéraux de la feuille (13) sur les chants des panneaux (7).
